# NEUE EUROPÄISCHE PATENTSCHRIFT

(11) **EP 1 118 627 B2**
(45) Veröffentlichungstag und Bekanntmachung des Hinweises auf die Entscheidung über den Einspruch: **16.11.2011**
(45) Hinweis auf die Patenterteilung: 05.01.2005
(21) Anmeldenummer: 01101085.7
(22) Anmeldetag: 18.01.2001
(51) Int. Cl.: C08G 18/08, C08G 18/32, C08G 18/67, C08G 18/79, C09D 175/16

(54) **Witterungsstabile, strahlungshärtbare Polyurethane**
Weather-resistant radiation curable polyurethanes
Polyuréthanes résistants aux intempéries durcissables par rayonnement

(30) Priorität: 19.01.2000 DE 10002089
(43) Veröffentlichungstag der Anmeldung: 25.07.2001
(73) Patentinhaber: BASF SE, 67056 Ludwigshafen (DE)
(72) Erfinder: Schwalm, Reinhold, Dr., 67157 Wachenheim (DE); Völlinger, Frank, 67480 Edenkoben (DE); Menzel, Klaus, 67069 Ludwigshafen (DE); Reich, Wolfgang, Dr., 67133 Maxdorf (DE); Beck, Erich, Dr., 68526 Ladenburg (DE); Laworek, Thomas, Dr., 67169 Kallstadt (DE)
(74) Vertreter: Reitstötter - Kinzebach

(56) Entgegenhaltungen:
- EP-A- 0 560 508
- EP-A- 0 603 046
- EP-A- 0 704 469
- EP-A1- 0 026 313
- WO-A1-01/23453
- DE-A1- 19 947 054
- JP-A- 7 138 527
- PATENT ABSTRACTS OF JAPAN vol. 016, no. 304 (C-0959), 6. Juli 1992 (1992-07-06) & JP 04 085320 A (MITSUI TOATSU CHEM INC), 18. März 1992 (1992-03-18)
- 'Szycher's Handbook of Polyurethanes', 23 April 1999 Artikel 'Chapter 14.8.1'

## Beschreibung

Die Erfindung betrifft in Wasser dispergierbare, strahlungshärtbare Polyurethane mit verbesserter Witterungsstabilität. Die Erfindung betrifft ebenso Dispersionen, die derartige Polyurethane enthalten. Außerdem betrifft die Erfindung ein Verfahren zum Beschichten von Substraten mit den Polyurethan-Dispersionen, die Verwendung der Polyurethane oder ihrer Dispersionen als Beschichtungsmittel für Außenanwendungen, sowie mit den Polyurethanen beschichtete Substrate.

Wasserdispergierbare, strahlungshärtbare Polyurethane sind z. B. bekannt aus US 5,905,113, EP-A-801092 und EP-A-704469. Sie sind in der Regel dadurch erhältlich, dass man eine Mischung aus einem Kettenverlängerungsmittel, d. h. einer Komponente mit mindestens zwei OH- oder mindestens zwei NH₂-Gruppen, mindestens einer Verbindung mit dispergieraktiven, d. h. ionischen oder ionisierbaren Gruppen, die eine gegenüber Isocyanat reaktive Gruppe aufweist, und mindestens einem Hydroxyalkylester einer ethylenisch ungesättigten Carbonsäure, insbesondere Hydroxyethylacrylat, mit einer Verbindung umsetzt, die mindestens zwei Isocyanatgruppen enthält. Als bifunktionelle Verbindungen mit zwei OH-Gruppen werden häufig Hydroxylgruppentragende Polyester oder Hydroxylgruppen-tragende Polyether verwendet. Beim Einsatz von Hydroxylgruppen-tragenden Polyethern erhält man jedoch unbefriedigende Witterungsstabilitäten. Polyurethane mit Polyesterstrukturen sind nicht stabil gegen Hydrolyse und daher zur Herstellung witterungsstabiler Beschichtungen nicht geeignet. Außerdem weisen die erhaltenen Beschichtungen hohe Oberflächenklebrigkeit auf. Der Einsatz von Polycaprolactonen führt zu einer verbesserten Witterungsstabilität.

Wässrige Polyurethan-Dispersionen werden überwiegend für die Beschichtung von Holz, Leder und Papier im Innenbereich eingesetzt. Die Anwendung von strahlungshärtbaren Beschichtungen im Außenbereich ist noch problematisch, da insbesondere wässrige Dispersionen nicht die gewünschte Witterungs- und Chemikalienstabilität aufweisen.

Aus US-A-5,859,135 sind wässrige Dispersionen von Polymeren mit funktionalen vernetzbaren Gruppen bekannt, wobei die Polymere lipophile Hauptketten, insbesondere auf der Basis von Polyestern, besitzen. Wegen des hohen Molekulargewichts der offenbarten lipophilen Hauptketten werden jedoch keine Vernetzungsdichten erreicht, die für eine gute Kratz- und Chemikalienstabilität notwendig sind.

Aus der EP-A-26313 und der EP-A-554 784 sind wässrige Polyurethan-Dispersionen und ihre Verwendung als Beschichtungsmittel bekannt. Diese Polyurethane besitzen durch ihren Gehalt an Sulfonsäure- bzw. Sulfonatgruppen eine hohe Hydrophilie, was zu einer unzureichenden Nassfestigkeit von damit hergestellten Beschichtungen führt.

Auch Polyurethane, die Carbonsäuregruppen als dispergieraktive Komponente aufweisen, können in ihren anwendungstechnischen Eigenschaften bisher nicht befriedigen. So zeigen Polyurethan-Dispersionen gemäß der EP-A-392 352, der EP-A-181 486 und der EP-A-209 684 Nachteile bezüglich der Chemikalienbeständigkeit und der mechanischen Eigenschaften, z. B. der Härte, der Elastizität und Flexibilität von Beschichtungen.

Wasserdispergierbare, strahlungshärtbare Polyurethane sind auch bekannt aus EP-A-704469. Die Polyurethane sind aufgebaut aus organischen Polyisocyanaten, Polyesterpolyolen, Verbindungen mit mindestens einer gegenüber Isocyanat reaktiven Gruppe und mindestens einer Carboxyl- oder Carboxylatgruppe, Verbindungen mit mindestens einer gegenüber Isocyanat reaktiven Gruppe und mindestens einer copolymerisierbaren ungesättigten Gruppe, und gegebenenfalls weiteren Komponenten. Diese Polyurethane stellen eine Verbesserung hinsichtlich Nassfestigkeit, Chemikalienbeständigkeit und mechanischen Eigenschaften der damit hergestellten Beschichtungen dar.

Es besteht somit nach wie vor Bedarf an weiterer Verbesserung, insbesondere hinsichtlich Witterungsstabilität, Chemikalienstabilität, Kratzfestigkeit, Flexibilität und anderen mechanischen Eigenschaften.

Aufgabe der vorliegenden Erfindung ist es daher, witterungsstabile, strahlungshärtbare Polyurethane bereitzustellen, die Beschichtungen mit guter Witterungs- und guter Chemikalienbeständigkeit ergeben und daher für Außenanwendungen geeignet sind. Außerdem sollen die Beschichtungen hohe Kratzfestigkeit und gute mechanische Eigenschaften aufweisen.

Aufgabe der vorliegenden Erfindung ist es auch, Polyurethan-Dispersionen mit derartigen Polyurethanen und ein Verfahren zur Herstellung dieser Polyurethan-Dispersionen bereitzustellen.

Die Aufgabe wird gelöst durch ein wasserdispergierbares, strahlungshärtbares Polyurethan, gemäß Anspruch 1. Weitere Gegenstände der Enfindung sind eine Polyurethan-Dispersion nach Anspruch 7, ein Verfahren zum Beschichten von Substraten nach Anspruch 8, die Verwendung eines wasserdispergierbaren, strahlungshärtbaren Polyurethan nach Anspruch 9 und ein beschichtetes Substrat nach Anspruch 10.

Die Polyurethane bzw. ihre wässrigen Dispersionen sind als Beschichtungsmittel für Außenanwendungen geeignet. Die erhaltenen Beschichtungen weisen hohe Witterungs- und Chemikalienbeständigkeit auf und zeigen keine Oberflächenklebrigkeit.

### Komponente a)

Geeignete Polyisocyanate a) sind vorzugsweise solche mit einer NCO-Funktionalität von mindestens 2, insbesondere mindestens 3.

In Betracht kommen z.B. geradlinige oder verzweigte
C₄-C₁₄-Alkylendiisocyanate, cycloaliphatische Diisocyanate mit insgesamt 6 bis 12 C-Atomen, Isocyanuratgruppen aufweisende Polyisocyanate, Uretdiondiisocyanate, Biuretgruppen aufweisende Polyisocyanate, Urethan- und/oder Allophanatgruppen aufweisende Polyisocyanate, Oxadiazintriongruppen enthaltende Polyisocyanate, Uretonimin-modifizierte Polyisocyanate oder deren Gemische in Betracht.

Als Diisocyanate genannt seien z. B. Tetramethylendiisocyanat, Hexamethylendiisocyanat(1,6-Diisocyanatohexan; HDI), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat; IPDI) oder 2,4- oder 2,6-Diisocyanato-1-methylcyclohexan.

Bei den Isocyanuratgruppen aufweisenden Polyisocyanaten handelt es sich insbesondere um einfache Tris-isocyanato-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 3 bis 4,5.

Bei Uretdiondiisocyanaten handelt es sich um cyclische Dimerisierungsprodukte von Diisocyanaten. Die Uretdiondiisocyanate können z.B. als alleinige Komponente oder im Gemisch mit anderen Polyisocyanaten, insbesondere den Isocyanuratgruppen enthaltenden Polyisocyanaten genannten, eingesetzt werden.

Geeignete Biuretgruppen aufweisende Polyisocyanate weisen vorzugsweise einen NCO-Gehalt von 18 bis 22 Gew.-% und eine mittlere NCO-Funktionalität von 3 bis 4,5 auf.

Urethan- und/oder Allophanatgruppen aufweisende Polyisocyanate können beispielsweise durch Umsetzung von überschüssigen Mengen an Diisocyanaten mit einfachen mehrwertigen Alkoholen wie z.B. Trimethylolpropan, Glycerin, 1,2-Dihydroxypropan oder deren Gemischen erhalten werden. Diese Urethan- und/oder Allophanatgruppen aufweisenden Polyisocyanate haben im Allgemeinen einen NCO-Gehalt von 12 bis 20 Gew.-% und eine mittlere NCO-Funktionalität von 2,5 bis 3.

Oxadiazintriongruppen enthaltenden Polyisocyanate sind aus Diisocyanat und Kohlendioxid herstellbar.

Die genannten Polyisocyanate können vorzugsweise auch im Gemisch eingesetzt werden.

Bevorzugte Polyisocyanate sind Diisocyanate und höherfunktionelle (cyclo)aliphatische Polyisocyanate.

Besonders bevorzugt sind Isocyanurat-, Allophanat- und Biuretgruppen enthaltende Polyisocyanate, insbesondere diejenigen von Hexamethylendiisocyanat, Isophorondiisocyanat, oder 1,3- oder 1,4 Bis(isocyanatomethyl)cyclohexan.

Besonders bevorzugt sind auch Gemische von Diisocyanaten, z.B. Hexamethylendiisocyanat und Isophorondiisocyanat, mit höher funktionellen Polyisocyanaten im Gewichtsverhältnis 95:5 bis 5:95, insbesondere 95:50 bis 5:50.

Die Isocyanatgruppen können auch in verkappter Form vorliegen. Als Verkappungsmittel für NCO-Gruppen eignen sich z. B. Oxime, Phenole, Imidazole, Pyrazole, Pyrazolinone, Diketopiperazine, Caprolactam, Malonsäureester oder Verbindungen, wie sie genannt sind in den Veröffentlichungen von Z.W. Wicks, Prog. Org. Coat. 3 (1975) 73-99 und Prog. Org. Coat. 9 (1981), 3-28, sowie in Houben-Weyl, Methoden der Organischen Chemie, Bd. XIV/2, 61 ff. Georg-Thieme-Verlag, Stuttgart 1963.

### Komponente b)

Erfindungsgemäß werden anstelle der im Stand der Technik verwendeten Polyether und Polyester vergleichsweise kurzkettige Diole eingesetzt, die cycloaliphatische Strukturelemente aufweisen. Ebenso brauchbar sind cycloaliphatische Diamine.

Bei den cycloaliphatischen Diolen und Diaminen handelt es sich insbesondere um Verbindungen der Formel I:

H-X-R¹-X-H

worin
- R¹: für C₁-C₁₂-Alkylen, das durch 1, 2 oder 3 C₃-C₈-Cycloalkylgruppen unterbrochen ist, C₃-C₈-Cycloalkylen oder bicyclisches C₆-C₁₀-Cycloalkylen steht, wobei die Cycloalkylgruppen und die bicyclischen Cycloalkylgruppen durch 1, 2 oder 3 C₁-C₄-Alkylgruppen substituiert sein können;
- X: für O oder NR² steht;
- R²: für H oder C₁-C₄-Alkyl steht,
wobei im Falle von X = NR², R¹ auch für -(CH₂)ₘ- und die beiden Reste R² zusammen für -(CH₂)ₘ- stehen können, wobei m und n unabhängig voneinander für 1, 2 oder 3 stehen.

Die Alkylenkette kann geradkettig oder verzweigt sein. Vorzugsweise handelt es sich um eine C₂-C₆-Alkylenkette. Die Cycloalkylgruppe (oder die Cycloalkylgruppen) kann (können) an beliebiger Stelle der Alkylenkette angeordnet sein. Vorzugsweise sind zwei Cycloalkylgruppen endständig an der Alkylenkette oder eine Cycloalkylgruppe im Inneren der Alkylenkette angeordnet.

Bei der Cycloalkylgruppe handelt es sich vorzugsweise um eine Cyclopentyl- oder Cyclohexylgruppe.

Bei der bicyclischen Cycloalkylgruppe handelt es sich vorzugsweise um eine Norbornan-, Pinan- oder Decalingruppe.

Geeignete cycloaliphatische Diole sind auch Ester der Formel II:

H-X-R¹-X-CO-A-CO-X-R¹-X-H

worin R¹ die oben angegebenen Bedeutungen besitzt, X für O steht und A für C₂-C₆-Alkylen, Cyclopentylen, Cyclohexylen, Phenylen oder O-CO-O steht.

In bevorzugten Diolen sind die OH-Gruppen an die cyclischen Molekülteile gebunden.

Besonders bevorzugte Diole sind Diole der Formel III: 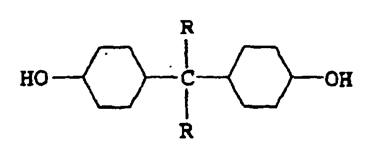 (worin R unabhängig voneinander für H, CH₃ oder C₂H₅ steht)
sowie 1,4-Bishydroxymethylcyclohexan, 1,3-Bis(4-hydroxycyclohexyl)propan, 2,2,4,4-Tetramethylcyclobutan-1,3-diol, 1,3- und 1,4-Cyclohexandiol, Cylooctandiol, Norbornandiol, Pinandiol, Decalindiol und deren Carbonate und Ester der Formel II. Als Dicarbonsäuren werden dabei vorzugsweise Adipinsäure und 1,4-Cyclohexandicarbonsäure eingesetzt.

Die Herstellung dieser Ester und Carbonate erfolgt in üblicher Weise und ist dem Fachmann bekannt.

Bevorzugte Diamine sind Methylen- oder Isopropyliden-bis(cyclohexylamin), Piperazin, 1,4-Diaminocyclohexan oder 1,4-Bisaminomethylcyclohexan.

Besonders bevorzugte Komponenten b) sind 1,4-Bishydroxymethylcyclohexan und 1,3-Bis(4-hydroxycyclohexyl)propan.

Besonders bevorzugte Diole b) sind außerdem perhydriertes Bisphenol A und andere Verbindungen mit zwei durch eine Alkylenbrücke verbundenen Cyclohexanol-Einheiten.

### Komponente c)

Als Komponente c) werden C₂-C₁₂-Hydroxyalkyl(meth)acrylate, insbesondere C₂-C₆-Hydroxyalkyl(meth)-acrylate, wobei die Alkylketten linear oder verzweigt sein können, eingesetzt.

Besonders bevorzugt als Komponente c) sind Hydroxyalkylacrylate, wie Hydroxyethyl-, Hydroxypropyl-, Hydroxybutylacrylat.

### Komponente d)

Als Komponente d) werden Verbindungen eingesetzt, die mindestens eine, vorzugsweise eine oder zwei gegenüber Isocyanatgruppen reaktionsfähige Gruppen, wie Hydroxyl-, primäre oder sekundäre Amino- oder Mercaptogruppen, und mindestens eine dispergieraktive Gruppe enthalten. Dispergieraktive Gruppen sind vorzugsweise Carboxyl- und/oder Sulfonsäuregruppen oder die Salzformen davon.

Als Komponente d) kommen somit Carbonsäuren oder Sulfonsäuren mit mindestens einer Hydroxy-, Amino- oder Mercaptogruppe in Betracht. Vorzugsweise handelt es sich dabei um aliphatische Monound Dihydroxy-, Mono-mercapto- oder Mono-aminocarbonsäuren oder - sulfonsäuren, wie Mercaptoessigsäure (Thioglykolsäure), Mercaptopropionsäure, Thiomilchsäure, Mercaptobernsteinsäure, Glycin, Iminodiessigsäure, Sarkosin, Alanin, Leucin, Isoleucin, Aminobuttersäure, Hydroxyessigsäure, Hydroxypivalinsäure, Milchsäure, Hydroxydecansäure, Hydroxydodecansäure, Hydroxyhexadecansäure, Hydroxyethansulfonsäure, Hydroxypropansulfonsäure, Mercaptoethansulfonsäure, Mercaptopropansulfonsäure, Aminomethansulfonsäure, Taurin, Aminopropansulfonsäure, Bis-(hydroxyalkyl)carbonsäuren, wie Dimethylolpropionsäure, bevorzugt Thioglykolsäure, Hydroxyessigsäure, Dimethylolpropionsäure und Hydroxypivalinsäure.

Durch die Komponente d) werden die Polyurethane dispergierbar, d. h. beim Dispergieren in Wasser werden keine Dispergierhilfsmittel, wie Schutzkolloide oder Emulgatoren, benötigt. Die Carboxylgruppen und/oder Sulfonsäuregruppen können vor oder bei der Dispergierung in Wasser durch anorganische und/oder organische Basen, wie Alkalihydroxide, -carbonate, -hydrogencarbonate, Ammoniak oder primäre, sekundäre oder vorzugsweise tertiäre Amine, wie Triethylamin, neutralisiert werden.

### Komponente e)

Als optimale Komponente e) kommen hydrolysestabile, kurzkettige Diole, insbesondere C₂-C₁₂-Diole, wie Ethylenglycol, Butandiol, Hexandiol und Decandiol, zur Anwendung. Auch Diole und/oder Diamine mit kurzkettigen Ether-, Ester-, Carbonat- oder Urethansegmenten, die aus den für die Komponenten b) oder e) genannten Diolen aufgebaut sind, sind geeignet.

### Komponente f)

Falls gewünscht, kann für den Aufbau der erfindungsgemäßen Polyurethane eine weitere Komponente eingesetzt werden, die von den Komponenten b) bis e) verschieden ist. Es handelt sich dabei insbesondere um Mono-C₁-C₁₂-alkohole, Mono-C₁-C₁₂-mercaptane oder Mono-C₁-C₁₂-amine, wie Methanol, Ethanol, Cyclohexanol, Cyclohexylamin etc.

### Komponente g)

Als Komponente g) kommen 0 bis 10 Gew.-%, vorzugsweise 0,1 bis 5 Gew.-%, bezogen auf das Gewicht des strahlungshärtbaren Polyurethans, eines oder mehrerer photochemisch oder radikalisch aktivierbarer Initiatoren in Frage, insbesondere nicht oder wenig vergilbende Photoinitiatoren. Dazu gehören die Phenylglyoxylsäureester der Formel: 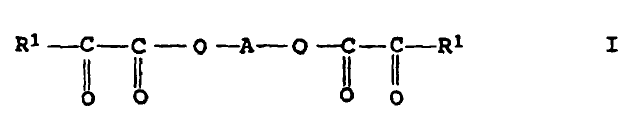 worin die beiden Reste R¹ unabhängig voneinander für einen Rest der Formel 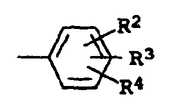 stehen,
R², R³ und R⁴ unabhängig voneinander für H, C₁-C₆-Alkyl, das gegebenenfalls durch OH, OC₁-C₆-Alkyl oder OCOC₁-C₆-Alkyl substituiert ist, oder für OH oder OC₁-C₆-Alkyl stehen;
A für C₂-C₆-Alkylen oder einen Rest der Formeln 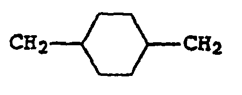 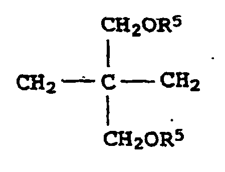 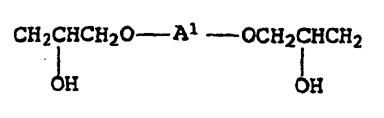 steht,
die Reste R⁵ unabhängig voneinander für H oder COCOR¹ stehen und A¹ für C₂-C₆-Alkylen oder 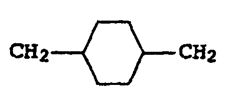 steht.

Die Phenylglyoxylsäureester sind in der DE 19913353 beschrieben und können nach dem in der WO 98/33761 beschriebenen Verfahren hergestellt werden.

Nicht oder wenig vergilbende Photoinitiatoren sind auch die Phenylglyoxylsäuren der Formel 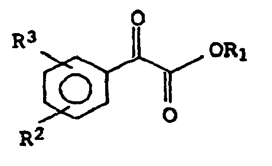 worin
- R¹: für ein H-Atom oder eine C₁-C₁₈-Alkylgruppe steht, und
- R² und R³: unabhängig voneinander für ein H-Atom, eine C₁-C₁₈-Alkoxygruppe stehen.

Diese Verbindungen sind in der DE 19826712 und in Angew. Makromol. Chem. 1981, 93 (1), 83-95 beschrieben. Weitere geeignete Photoinitiatoren sind z. B. Benzophenon, Alkylbenzophenone, halogenmethylierte Benzophenone, Michlers Keton, Anthron und halogenierte Benzophenone. Ferner eignen sich Benzoin und seine Derivate. Ebenfalls wirksame Photoinitiatoren sind Anthrachinon und zahlreiche seiner Derivate, beispielsweise β-Methylanthrachinon, tert.-Butylanthrachinon und Anthrachinoncarbosäureester und Acylphoshinoxide, z.B. 2,4,6-Trimethylbenzoyldiphenylphosphinoxid (Lucirin® TPO).

Die Photoinitiatoren, die je nach Verwendungszweck der erfindungsgemäßen Massen im Allgemeinen in Mengen zwischen 0,05 bis 20 Gew.-%, vorzugsweise 0,05 bis 5 Gew.-%, bezogen auf das Polyurethan, eingesetzt werden, können als einzelne Substanz oder, wegen häufiger vorteilhafter synergistischer Effekte, auch in Kombination miteinander verwendet werden.

Vorteilhafte Zusätze, die zu einer weiteren Steigerung der Reaktivität führen können, sind tert. Amine wie z.B. Triethylamin und Triethanolamin. Auch sie werden im Allgemeinen in Mengen bis zu 5 Gew.-%, bezogen auf das Polyurethan, eingesetzt.

### Komponente h)

Als Komponente h) kommen UV-Absorber und HALS (Hindered Amine Light Stabilizer)-Verbindungen in Frage, wie sie beispielsweise in der US-A-5,369,140 beschrieben sind. Dies sind UV-Absorber der Klasse der 2-Hydroxyphenyl-s-triazine und Lichtstabilisatoren aus der Klasse der sterisch gehinderten Amine, insbesondere jene der Klasse der 2,2,6,6-Tetramethylpiperidine.

Die Anteile der Aufbaukomponenten sind vorzugsweise wie folgt:
b) 0,05 bis 0,4 Äquivalente, besonders bevorzugt 0,1 bis 0,3 Äquivalente der Hydroxylgruppen, bezogen auf ein Äquivalent Polyisocyanat a) (5 bis 40 Mol-%);
c) Komponente c) wird in solcher Menge eingesetzt, dass der Gehalt an Doppelbindungen in den Polyurethanen 0,15 bis 0,6, vorzugsweise 0,20 bis 0,50 mol/100 g Polyurethan beträgt.
d) Komponente d) wird in solchen Mengen eingesetzt, dass das Polyurethan einen Gehalt von 0,005 bis 0,1, besonders bevorzugt 0,01 bis 0,03 mol dispergieraktive Gruppen pro 100 g Polyurethan aufweist.
e) 0 bis 0,2 Äquivalente, besonders bevorzugt 0 bis 0,1 Äquivalente, bezogen auf ein Äquivalent Polyisocyanat a);
f) 0 bis 0,4, besonders bevorzugt 0,1 bis 0,3 Äquivalente an mit Isocyanat reaktiven Gruppen.

Das molare Verhältnis von Isocyanatgruppen zu den mit Isocyanat reaktiven Gruppen aller Aufbaukomponenten b) bis f) beträgt vorzugsweise 1:0,8 bis 1:1,2, besonders bevorzugt etwa 1:1.

Die Herstellung der erfindungsgemäßen Polyurethane erfolgt dadurch, dass die Komponenten a), b) und c) sowie gegebenenfalls e) in einer lösungsmittelhaltigen Vorstufe vor der Dispergierung zur Reaktion gebracht werden und gegebenenfalls Komponente h) (Lichtstabilisatoren auf der Basis sterisch gehinderter Amine) in der lösungsmittelhaltigen Vorstufe zugegeben werden. Der Reaktionsverlauf kann durch die Abnahme der funktionellen Gruppen, insbesondere der Isocyanatgruppen, verfolgt werden.

Die Reaktion wird vorzugsweise in einem inerten, mit Wasser mischbaren Lösungsmittel, wie Aceton, Tetrahydrofuran, Methylethylketon oder N-Methylpyrrolidon durchgeführt. Die Reaktionstemperatur liegt im Allgemeinen zwischen 20 und 100 °C, bevorzugt zwischen 50 und 80 °C.

Zur Beschleunigung der Reaktion der Isocyanate können die üblichen Katalysatoren, wie Dibutylzinndilaurat, Zinn-II-octoat oder Diazabicyclo-(2,2)-octan, mitverwendet werden.

Die Komponente d) und gegebenenfalls die Komponente f) wird vorzugsweise erst gegen Ende der Reaktion zugegeben. Anschließend wird im Allgemeinen mit einem Amin, beispielsweise Triethylamin, oder einem Gemisch von Aminen neutralisiert. Dann kann das Lösungsmittel abdestilliert werden, und man setzt die zum Dispergieren erforderliche Menge an Wasser zu. Anschließend fügt man in der Regel die Bestandteile g) und sofern erwünscht h) zu. Diese Bestandteile können auch bereits zu einem früheren Zeitpunkt zugegeben werden.

Der Feststoffgehalt der so erhaltenen Dispersion liegt bevorzugt zwischen 25 und 60 %, besonders bevorzugt zwischen 30 und 50 %.

Die mittlere Teilchengröße (bestimmt mittels Zetasizer, Malvern Instruments) liegt unter 10 µm, bevorzugt unter 3 µm und ganz besonders bevorzugt unter 1 µm. Die Untergrenze der mittleren Teilchengröße liegt im Allgemeinen bei etwa 30 nm.

Die erfindungsgemäßen Dispersionen können weitere Zusätze, z. B. Pigmente, Farbstoffe, Füllstoffe und in der Lacktechnologie übliche Hilfsmittel enthalten.

Die erfindungsgemäßen Dispersionen können auch thermisch vernetzt werden, wenn sie Initiatoren, die bei erhöhten Temperaturen Radikale bilden, enthalten. Verwendbar sind z. B. Dibenzoylperoxid, Cumolhydroperoxid oder Azodiisobuttersäuredinitril.

Die erfindungsgemäßen Polyurethane und Polyurethan-Dispersionen können für die Herstellung von Formkörpern und, bevorzugt, Beschichtungen verwendet werden.

Die erfindungsgemäßen Dispersionen erweisen sich als besonders geeignet zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und Metalle oder beschichtete Metalle.

Demnach betrifft die vorliegende Erfindung auch ein Verfahren zum Beschichten von Substraten sowie die durch dieses Verfahren erhältlichen beschichteten Substrate. Die Beschichtung der Substrate erfolgt in der Regel dadurch, dass man wenigstens eine erfindungsgemäße Dispersion, die gegebenenfalls mit lacktypischen Additiven versetzt ist, auf das zu beschichtende Substrat in der gewünschten Stärke aufbringt und gegebenenfalls vorhandenes Lösungsmittel entfernt. Dieser Vorgang kann, sofern gewünscht, einoder mehrfach wiederholt werden. Das Aufbringen der strahlungshärtbaren Zubereitungen auf das Substrat erfolgt in bekannter Weise, z. B. durch Spritzen, Spachteln, Rakeln, Bürsten, Rollen, Walzen oder Gießen. Die Beschichtungsstärke liegt in der Regel im Bereich von 3 bis 1000 g/m² und vorzugsweise 10 bis 200 g/m². Das Aufbringen kann sowohl bei Raumtemperatur als auch bei erhöhter Temperatur, vorzugsweise jedoch nicht oberhalb 100 °C erfolgen.

Bei porösen Substraten, wie beispielsweise Leder, Papier oder Holz, sind im Allgemeinen nur sehr kurze Zeiten für die physikalische Trocknung erforderlich, da die Hauptmenge des Wassers vom Untergrund aufgenommen wird.

Im Allgemeinen härtet man anschließend die Beschichtungen durch Bestrahlung mit energiereicher Strahlung.

Gegebenenfalls kann, wenn mehrere Schichten des Beschichtungsmittels übereinander aufgetragen werden, nach jedem Beschichtungsvorgang eine Strahlungshärtung erfolgen.

Die Strahlungshärtung erfolgt durch Einwirkung energiereicher Strahlung, also UV-Strahlung oder Tageslicht, vorzugsweise Licht der Wellenlänge 250 bis 600 nm oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Die Bestrahlung kann gegebenenfalls auch unter Ausschluss von Sauerstoff, z. B. unter Inertgas-Atmosphäre, durchgeführt werden. Als Inertgase eignen sich vorzugsweise Stickstoff, Edelgase, Kohlendioxid oder Verbrennungsgase. Des Weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser.

In einem bevorzugten Verfahren erfolgt die Aushärtung kontinuierlich, indem man das mit der erfindungsgemäßen Zubereitung behandelte Substrat mit konstanter Geschwindigkeit an einer Strahlungsquelle vorbeiführt. Hierfür ist es erforderlich, dass die Aushärtungsgeschwindigkeit der erfindungsgemäßen Zubereitung ausreichend hoch ist.

Die erfindungsgemäßen Polyurethane ergeben schon nach dem physikalischen Trocknen eine im Wesentlichen klebefreie, trockene Beschichtung. Nach der Strahlungshärtung hat die Beschichtung eine sehr gute Witterungsstabilität, Chemikalienstabilität und Kratzfestigkeit bei zumindest vergleichbaren mechanischen Eigenschaften, wie Härte, Reissfestigkeit, Elastizität, Flexibilität und Haftung.

Die Erfindung wird nachstehend anhand von Beispielen näher erläutert.

### Beispiel 1:

### Herstellen einer witterungsstabilen Polyurethanacrylatdispersion

### Herstellen der Vorstufe:

In einem Rührkessel wurden 455 Teile Hydroxyethylacrylat, 377 Teile 2,2-Bis-(4-hydroxycyclohexyl)propan, 2,3 Teile 2,6 Dit-butyl-p-Kresol, 1,2 Teile Hydrochinonmonomethylether vorgelegt, 0,5 Teile Dibutylzinndilaurat und 1500 Teile des Isocyanurats von Hexamethylendiisocyanat zugegeben und 5 Stunden bei 60 °C gerührt. Es wurde mit 500 Teilen Aceton verdünnt. Der NCO-Wert betrug 1,05 %.

### Herstellen der Polyurethandispersion:

882 Teile dieser Lösung wurden mit 9,7 Teilen Thioglycolsäure und 3,7 Teilen Methanol versetzt und 8 Stunden bei 40 °C reagieren gelassen. Dann gab man 11 Teile Triethylamin zu, dispergierte in Wasser und destillierte das Aceton ab. Die Teilchengröße betrug 75 nm.

### Vergleichsbeispiel 1 (Beispiel 1 der EP 704469):

In einem Rührkessel wurden 6,74 g eines Polyesters aus IsoPhthalsäure, 1,6-Hexandiol und Adipinsäure mit einem Molekulargewicht von ca. 2 000 (Zahlenmittel) und ca. 10 000 (Gewichtsmittel), 3,26 kg 1,4-Butandiol, 7,83 kg 2-Hydroxyethylacrylat, 1,6 kg Aceton, 31,2 g Hydrochinonmonomethylether, 19,4 g Dibutylzinndilaurat und 58,2 g 2,6-Di-t-butyl-p-kresol vorgelegt. Der Inhalt wurde auf 60 °C vorgeheizt und während zwei Stunden eine Mischung von 15,91 kg Isophorondiisocyanat mit 4,94 kg Basonat PLR 8 638 (trimerisiertes HDI) zugetropft. Nachdem der Isocyanatgehalt auf 1,15 % abgesunken war, wurde 3,16 kg PUD-Salz (Michael-Addukt von Acrylsäure an Ethylendiamin) als 40 %ige wässrige Lösung zugegeben. Schließlich wurden 47,7 kg destilliertes Wasser zugegeben, der Innenraum auf 65 °C erhitzt und Aceton-Wassermischung abdestilliert. Der Verlust des abdestillierten Wassers wurde durch erneute Zugabe ausgeglichen. Die Teilchengröße betrug 65 nm.

### Anwendungstechnische Prüfung

### Herstellen von Filmen

Die Dispersionen aus Beispiel 1 und Vergleichsbeispiel 1 wurden mit 4 Gew.-% Photoinitiator Irgacure 500 (Ciba) (Benzildimethylketal) versetzt und in Schichtdicken von ca 40 µm auf verschiedene Substrate aufgezogen und folgendermaßen behandelt: über Nacht bei Raumtemperatur abgelüftet, dann 15 Minuten bei 60 °C getempert und in einer IST-UV-Anlage auf einem Transportband mit 10 m/min mit 2 UV-Lampen (120 W/cm) bestrahlt. Beide Filme waren physikalisch trocken und durchgehärtet (Fingernageltest).

Die Chemikalienstabilität wurde nach DIN 68861 (chemische Beanspruchung von Möbeloberflächen) für 10 Chemikalien (Reinigungsmittel, Kugelschreiberpaste, Desinfektionsmittel, Lippenstift Senf, Butylacetat, Johannisbeersaft, Kaffee, Rotwein, Natriumkarbonat; Substrat: schwarz eingefärbte Basecoat auf Metall) bestimmt (Note 0: keine sichtbaren Veränderungen bis Note 5: Prüffläche zerstört).

Die Beurteilung der Kratzfestigkeit erfolgte in einem Scheuertest, bei dem mit einem Scotch Brite-Gewebe unter einem Gewicht von 750 g 50 Doppelhübe ausgeführt wurden. Der Verkratzungsgrad der Beschichtung auf einer schwarz eingefärbten Glasplatte wurde über die Bestimmung des Glanzabfalls in % (vor und nach entsprechender Beanspruchung) bestimmt.

Die Witterungsstabilität wurde bestimmt, indem ca. 35 µm dicke Filme der Dispersionen auf einen Bariumfluoridkristall aufgezogen und gehärtet wurden. Diese Proben wurden dann in ein QUV Weathero-meter UVA-A-340 mit Fluoreszenzlampen UV-Wassercyclen von 8 Stunden Bestrahlung bei 70 °C und 4 Stunden Dunkelkondensation bei 50 °C ausgesetzt. Nach 300 Stunden wurde die Abnahme der C-H-(2951 cm⁻¹) und C-N-(1531 cm⁻¹)Banden im IR-Spektrum bestimmt. Alternativ wurden Lackproben in dem Xenontest 1200 der Fa. Heraeus nach ISO/DIS 11341 bestrahlt (Trockenperiode 17 min / Beregnungsdauer 3 min) und der Glanzgradabfall bestimmt.

Die Pendelhärte wurde nach DIN 53157 (Substrat: schwarz eingefärbte Glasplatte) bestimmt. Sie ist ein Maß für die Härte der Beschichtung (hohe Werte: hohe Härte).

Die Erichsentiefung wurde nach DIN ISO 1520 (Substrat: Bonderblech) bestimmt. Sie ist ein Maß für die Flexibilität und Haftung der Beschichtung (hohe Werte: hohe Flexibilität).

| | Chemikalienstabilität (Note) | Kratzfestigkeit (Glanzverlust %) | Witterungsstabilität (Abbau C-H-, C-N-Bande, %) |
|---|---|---|---|
| Beispiel 1 | 0,70 | 29 | 4/0 |
| Vergleichsbeispiel 1 | 1,05 | 61 | 7/15 |

Bei gleich gutem Niveau der mechanischen Eigenschaften (Pendelhärte Beispiel 1: 114 Schwingungen / Vergleichsbeispiel 1: 105 Schwingungen; Erichsentiefung Beispiel 1: 7,8 mm / Vergleichsbeispiel 1: 8,6 mm) und physikalischer Antrocknung (Pendelhärte vor UV-Bestrahlung Beispiel 1: 8 Schwingungen / Vergleichsbeispiel 1: 12 Schwingungen) resultieren deutlich Verbesserungen der Chemikalien-, Kratz- und Witterungsstabilität.

### Vergleichsbeispiele 2 bis 6:

In Beispiel 1 wurde der Anteil Bis-(hydroxycyclohexyl)propan durch andere Diole, kurzkettige Polyether, Polyester, Polycarbonat bzw. Polymethacrylat-Diole ersetzt:
- V2:: Polyether aus Tetrahydrofuran (Poly-THF 1000)
- V3:: Polycarbonat Desmodur 2020 (Bayer AG)
- V4:: aromatischer Polyester aus Isophthalsäure, Adipinsäure und Hexandiol (M = 1000)
- V5:: Polymethacrylat: BD 1000 von Goldschmidt
- V6:: aliphatischer Polyester aus Adipinsäure und Neopentylglycol (M = 3024).

| | Witterungsstabilität | |
|---|---|---|
| | Abnahme der C-H-Bande (in %) | Abnahme der C-N-Bande (in %) |
| V2 | 24 | 18 |
| V3 | 10 | 19 |
| V4 | 11 | 22 |
| V5 | 6 | 18 |
| V6 | 11 | 23 |
| Beispiel 1 | 4 | 0 |

### Beispiel 2:

Es wurde wie in Beispiel 1 verfahren, jedoch wurde anstatt des Isocyanurats von HDI eine Mischung von 75 % des Isocyanurats von HDI mit 25 % des Isocyanurats von IPDI verwendet.

Die physikalische Antrocknung ist deutlich verbessert: Pendelhärte vor UF: 21 Schwingungen. Im Xenontest zeigt sich nach 300 Stunden kein Glanzabfall.

### Beispiel 3:

### Herstellen einer witterungsstabilen Polyurethanacrylatdispersion auf Basis Allophanat

In einem Rührkessel wurden 43 Teile Aceton, 92 Teile 2,2-Bis-(4-hydroxycyclohexyl)propan, 0,4 Teile 2,6-Di-t-butyl-p-kresol, 0,2 Teile Hydrochinonmonomethylether vorgelegt, 0,1 Teile Dibutylzinndilaurat und 333 Teile eines Allophanats aus Hydroxylethylacrylat und Hexamethylendiisocyanat zugegeben und 5 Stunden bei 65 °C gerührt. Es wurde mit 50 Teilen Aceton verdünnt. Der NCO-Wert betrug 0,68 %. 8,5 Teile Thioglycolsäure wurden zugegeben und 6 Stunden bei 60 °C reagieren gelassen. Dann gab man 94, Teile Triethylamin zu, dispergierte in Wasser und destillierte das Aceton ab (28 % Feststoffgehalt). Im Xenontest zeigte sich nach 300 Stunden kein Glanzabfall.

## Patentansprüche

1. Wasserdispergierbares, strahlungshärtbares Polyurethan, das im Wesentlichen aufgebaut ist aus
a) organischen, aliphatischen oder alicyclischen Polyisocyanaten,
b) cycloaliphatischen Diolen und/oder cycloaliphatischen Diaminen,
c) C₂-C₁₂-Hydroxyalkyl(meth)acrylaten,
d) Verbindungen mit mindestens einer gegenüber Isocyanat reaktiven Gruppe und mindestens einer dispergieraktiven Gruppe,
e) gewünschtenfalls Verbindungen mit mindestens zwei gegenüber Isocyanat reaktiven Gruppen mit einem Molekulargewicht < 1 000 g/Mol,
f) gewünschtenfalls von a) bis d) verschiedenen Verbindungen mit mindestens einer gegenüber Isocyanat reaktiven Gruppe,
ausgenommen Polyurethane, erhältlich durch
1a) Herstellen eines Präpolymeren, bei dem man in einem Rührkessel 455 Teile 2-Hydroxyethylacrylat, 377 Teile 2,2-Bis(4-hydroxycyclohexyl)propan, 2,3 Teile 2,6-Di-tert.-Butyl-p-kresol, 1,2 Teile Hydrochinonmonomethylether vorlegt, 0,5 Teile Dibutylzinndilaurat und 1500 Teile des Isocyanurats von Hexamethylen-1,6-diisocyanat zugibt, 5 Stunden bei 60 °C rührt und danach mit 500 Teilen Aceton verdünnt, und
1b) Herstellen des Polyurethans als wässrige Polyurethandispersion, bei dem man 150 Teilen der in 1a) hergestellten Lösung 1,4 Teile Thioglykolsäure, 1,6 Teile Butanon-2-oxim oder 1,2 Teile Methanol und 1,8 Teile Triethylamin zumischt, den Ansatz 8 Stunden bei 40 °C hält, danach in Wasser dispergiert und das Aceton abdestilliert.

2. Polyurethan nach Anspruch 1, **dadurch gekennzeichnet, dass** das Polyisocyanat a) ein Isocyanurat, ein Biuret oder ein Allophanat von Hexamethylendiisocyanat oder Isophorondiisocyanat oder ein Gemisch der Verbindungen ist.

3. Polyurethan nach Anspruch 1, **dadurch gekennzeichnet, dass** das Diol b) 1,4-Bishydroxymethylcyclohexan, Bis-(Hydroxycyclohexyl)propan oder Cyclohexandiol oder ein Gemisch aus mindestens zwei der Diole ist.

4. Polyurethan nach einem der Ansprüche 1 bis 3, **dadurch gekennzeichnet, dass** der Anteil des Diols b) 5 bis 40 Mol-%, bezogen auf die Isocyanatgruppen, beträgt.

5. Polyurethan nach einem der Ansprüche 1 bis 5, **dadurch gekennzeichnet, dass** es als Komponente c) mindestens eines der Hydroxyalkylacrylate Hydroxyethylacrylat, Hydroxypropylacrylat, Hydroxybutylacrylat oder Pentaerythrittriacrylat enthält.

6. Polyurethan nach einem der Ansprüche 1 bis 6, **dadurch gekennzeichnet, dass** als Komponente d) Dimethylolpropionsäure, Thioglykolsäure, Hydroxyessigsäure, Hydroxypivalinsäure oder ein Gemisch aus mindestens zwei der Säuren vorhanden ist.

7. Polyurethan-Dispersion, **dadurch gekennzeichnet, dass** sie ein Polyurethan gemäß einem der Ansprüche 1 bis 7 und gegebenenfalls
g) 0 bis 10 Gew.-% eines oder mehrerer photochemisch und/oder thermisch aktivierbarer Initiatoren,
h) 0 bis 10 Gew.-% UV-Absorbern und HALS-Verbindungen enthält.

8. Verfahren zum Beschichten von Substraten, **dadurch gekennzeichnet, dass** eine Polyurethan-Dispersion gemäß Anspruch 7, gewünschtenfalls mit weiteren lacktypischen Additiven versetzt, auf ein Substrat aufgebracht, getrocknet, mit Elektronenstrahlen oder UV-Belichtung unter Sauerstoff, oder, bevorzugt, unter Inertgas gehärtet wird.

9. Verwendung eines wasserdispergierbaren, strahlungshärtbaren Polyurethans, das im Wesentlichen aufgebaut ist aus
a) organischen, aliphatischen oder alicyclischen Polyisocyanaten,
b) cycloaliphatischen Diolen und/oder cycloaliphatischen Diaminen,
c) C₂-C₁₂-Hydroxyalkyl(meth)acrylaten,
d) Verbindungen mit mindestens einer gegenüber Isocyanat reaktiven Gruppe und mindestens einer dispergieraktiven Gruppe,
e) gewünschtenfalls Verbindungen mit mindestens zwei gegenüber Isocyanat reaktiven Gruppen mit einem Molekulargewicht < 1 000 g/Mol,
f) gewünschtenfalls von a) bis d) verschiedenen Verbindungen mit mindestens einer gegenüber Isocyanat reaktiven Gruppe,
oder dessen Dispersion, die gegebenenfalls
g) 0 bis 10 Gew.-% eines oder mehrerer photochemisch und/oder thermisch aktivierbarer Initiatoren,
h) 0 bis 10 Gew.-% UV-Absorbern und HALS-Verbindungen enthält,
als Beschichtungsmittel für Außenanwendungen.

10. Beschichtetes Substrat, **dadurch gekennzeichnet, dass** es mit einem strahlungshärtbaren Polyurethan gemäß einem der Ansprüche 1 bis 6 beschichtet ist.

## Claims

1. A water-dispersible, radiation-curable polyurethane composed essentially of
a) organic, aliphatic or alicyclic polyisocyanates,
b) cycloaliphatic diols and/or cycloaliphatic diamines,
c) C₂-C₁₂ hydroxy-alkyl (meth) acrylates,
d) compounds containing at least one isocyanate-reactive group and at least one dispersing-active group,
e) if desired, compounds containing at least two isocyanate-reactive groups having a molecular weight < 1000 g/mol,
f) if desired, compounds other than a) to d) containing at least one isocyanate-reactive group,
with the exception of polyurethanes obtainable by
1a) preparing a prepolymer by charging a stirred tank with 455 parts of 2-hydroxyethyl acrylate, 377 parts of 2,2-bis(4-hydroxycyclohexyl)propane, 2.3 parts of 2,6-di-tert-butyl-p-cresol, 1.2 parts of hydroquinone monomethyl ether, adding 0.5 part of dibutyltin dilaurate and 1500 parts of the isocyanurate of hexamethylene 1,6-diisocyanate, stirring the mixture at 60°C for 5 hours and then diluting the product with 500 parts of acetone, and
1b) preparing the polyurethane as an aqueous polyurethane dispersion by admixing 150 parts of the solution prepared in 1a) with 1.4 parts of thioglycolic acid, 1.6 parts of butanone-2-oxime or 1.2 parts of methanol and 1.8 parts of triethylamine, holding the batch at 40°C for 8 hours, then dispersing it in water and distilling off the acetone.

2. The polyurethane according to claim 1, wherein the polyisocyanate a) is an isocyanurate, a biuret or an allophanate or hexamethylene diisocyanate or isophorone diisocyanate or is a mixture of the compounds.

3. The polyurethane according to claim 1, wherein the diol b) is 1,4-bishydroxymethylcyclohexane, bis(hydroxycyclohexyl)propane or cyclohexanediol or a mixture of at least two of the diols.

4. The polyurethane according to any of claims 1 to 3, wherein the fraction of the diol b) is from 5 to 40 mol%, based on the isocyanate groups.

5. The polyurethane according to any of claims 1 to 4, comprising as component c) at least one of the hydroxyalkyl acrylates hydroxyethyl acrylate, hydroxypropyl acrylate, hydroxybutyl acrylate or pentaerythritol triacrylate.

6. The polyurethane according to any of claims 1 to 5, wherein dimethylolpropionic acid, thioglycolic acid, hydroxyacetic acid, hydroxypivalic acid or a mixture of at least two of the acids is present as component d).

7. A polyurethane dispersion comprising a polyurethane according to any of claims 1 to 6 and optionally
g) from 0 to 10% by weight of one or more photochemically and/or thermally activatable initiators,
h) from 0 to 10% by weight of UV absorbers and HALS compounds.

8. A method of coating substrates, which comprises applying a polyurethane dispersion according to claim 7, to which typical coatings additives have been added if desired, to a substrate, drying it and curing it with electron beams or UV light under oxygen or, preferably, under inert gas.

9. The use of a water-dispersible, radiation-curable polyurethane composed essentially of
a) organic, aliphatic or alicyclic polyisocyanates,
b) cycloaliphatic diols and/or cycloaliphatic diamines,
c) C₂-C₁₂ hydroxy-alkyl (meth) acrylates,
d) compounds containing at least one isocyanate-reactive group and at least one dispersing-active group,
e) if desired, compounds containing at least two isocyanate-reactive groups having a molecular weight < 1000 g/mol,
f) if desired, compounds other than a) to d) containing at least one isocyanate-reactive group,
or its dispersion which optionally comprises
g) from 0 to 10% by weight of one or more photochemically and/or thermally activatable initiators,
h) from 0 to 10% by weight of UV absorbers and HALS compounds
as a coating composition for exterior applications.

10. A substrate coated with a radiation-curable polyurethane according to any of claims 1 to 6.

## Revendications

1. Polyuréthanne durcissable par irradiation, dispersable dans l'eau, qui est essentiellement constitué
a) de polyisocyanates organiques, aliphatiques ou alicycliques,
b) de diols cycloaliphatiques et/ou de diamines cycloaliphatiques,
c) de (méth)acrylates d'hydroxyalkyle en C₂-C₁₂,
d) de composés comportant au moins un groupe réactif vis-à-vis d'un isocyanate et au moins un groupe actif pour la dispersion,
e) si on le désire, de composés comportant au moins deux groupes réactifs vis-à-vis d'un isocyanate, ayant une masse moléculaire < 1000 g/mole,
f) si on le désire, de composés différents de a) à d), comportant au moins un groupe réactif vis-à-vis d'un isocyanate,
à l'exclusion de polyuréthannes pouvant être obtenus par
la)préparation d'un prépolymère, dans laquelle on introduit dans un récipient à agitation 455 parties d'acrylate de 2-hydroxyéthyle, 377 parties de 2,2-bis(4-hydroxycyclohexyl)-propane, 2,3 parties de 2,6-di-tert-butyl-p-crésol, 1,2 partie d'éther monométhylique d'hydroquinone, 0,5 partie de dilaurate de dibutylétain et 1 500 partie de l'isocyanurate d'hexaméthylène-1,6-diisocyanate, on agite pendant 5 heures à 60 °C et on dilue ensuite avec 500 parties d'acétone, et
2a) préparation du polyuréthanne sous forme de dispersion aqueuse de polyuréthanne, dans laquelle on mélange 150 parties de la solution préparée en 1a), 1,4 partie d'acide thioglycolique, 1,6 partie de butanone-2-oxime ou 1,2 partie de méthanol et 1,8 partie de triéthylamine, on maintient le mélange pendant 8 heures à 40 °C, puis on le disperse dans de l'eau et on élimine l'acétone par distillation.

2. Polyuréthanne selon la revendication 1, **caractérisé en ce que** le polyisocyanate a) est un isocyanurate, un biuret ou un allophanate d'hexaméthylène-diisocyanate ou d'isophorone-diisocyanate ou un mélange des composés.

3. Polyuréthanne selon la revendication 1, **caractérisé en ce que** le diol b) est le 1,4-bishydroxyméthylcyclohexane, le bis(hydroxycyclohexyl)propane ou le cyclohexanediol ou un mélange d'au moins deux des diols.

4. Polyuréthanne selon l'une quelconque des revendications 1 à 3, **caractérisé en ce que** la proportion du diol b) va de 5 à 40 % en moles, par rapport aux groupes isocyanate.

5. Polyuréthanne selon l'une quelconque des revendications 1 à 4, **caractérisé en ce qu'**il contient en tant que composant c) au moins l'un des acrylates d'hydroxyalkyle acrylate d'hydroxyéthyle, acrylate d'hydroxypropyle, acrylate d'hydroxybutyle et triacrylate de pentaérythritol.

6. Polyuréthanne selon l'une quelconque des revendications 1 à 5, **caractérisé en ce que**, en tant que composant d) est présent de l'acide diméthylolpropionique, de l'acide thioglycolique, de l'acide hydroxyacétique, de l'acide hydroxypivalique ou un mélange d'au moins deux des acides.

7. Dispersion de polyuréthanne, **caractérisée en ce qu'**elle contient un polyuréthanne selon l'une quelconque des revendications 1 à 6 et éventuellement
g) 0 à 10 % en poids d'un ou plusieurs amorceurs activables thermiquement et/ou photochimiquement,
h) 0 à 10 % en poids d'absorbeurs UV et de composés de type HALS (photoprotecteurs de type amine à empêchement stérique).

8. Procédé pour le revêtement de subjectiles, **caractérisé en ce**, si on le désire, on ajoute à une dispersion de polyuréthanne selon la revendication 7 d'autres additifs normalement utilisés dans des peintures, on la sèche et on la fait durcir au moyen de faisceaux d'électrons ou d'une insolation avec de la lumière UV, sous oxygène ou, de préférence, sous un gaz protecteur.

9. Utilisation d'un polyuréthanne durcissable par irradiation, dispersable dans l'eau, qui est essentiellement constitué
a) de polyisocyanates organiques, aliphatiques ou alicycliques,
b) de diols cycloaliphatiques et/ou de diamines cycloaliphatiques,
c) de(méth)acrylates d'hydroxyalkyle en C₂-C₁₂,
d) de composés comportant au moins un groupe réactif vis-à-vis d'un isocyanate et au moins un groupe actif pour la dispersion,
e) si on le désire, de composés comportant au moins deux groupes réactifs vis-à-vis d'un isocyanate, ayant une masse moléculaire < 1000 g/mole,
f) si on le désire, de composés différents de a) à d), comportant au moins un groupe réactif vis-à-vis d'un isocyanate
qui continient éventuellement ou de sa dispersion
g) 0 à 10 % en poids d'un ou plusieurs amorceurs activables thermiquement et/ou photochimiquement,
h) 0 à 10 % en poids d'absorbeurs UV et de composés de type HALS (photoprotecteurs de type amine à empêchement stérique),
en tant que produit de revêtement pour des applications à l'extérieur.

10. Subjectile revêtu, **caractérisé en ce qu'**il est revêtu d'un polyuréthanne durcissable par irradiation selon l'une quelconque des revendications 1 à 6.
